# EUROPÄISCHE PATENTSCHRIFT

(11) **EP 0 878 658 B1**
(45) Veröffentlichungstag und Bekanntmachung des Hinweises auf die Patenterteilung: **13.08.2003**
(21) Anmeldenummer: 98107851.2
(22) Anmeldetag: 29.04.1998
(51) Int. Cl.: F16N 25/02, F01M 1/16

(54) **Progressiv-Verteilvorrichtung für Schmieranlagen**
Progressive distributor for lubrication systems
Distributeur progressif pour des systèmes de graissage

(30) Priorität: 14.05.1997 DE 29708580 U
(43) Veröffentlichungstag der Anmeldung: 18.11.1998
(73) Patentinhaber: VOGEL fluidtec GmbH, 68766 Hockenheim (DE)
(72) Erfinder: Saam, Werner, 68794 Oberhausen (DE); Zeiller, Manfred, 85667 Oberpframmern (DE)
(74) Vertreter: Grünecker, Kinkeldey, Stockmair & Schwanhäusser Anwaltssozietät

(56) Entgegenhaltungen:
- EP-A- 0 006 239
- EP-A- 0 314 969
- DE-U- 9 115 265
- FR-A- 1 230 534
- US-A- 5 311 968
- US-A- 5 480 004

## Beschreibung

Die Erfindung betrifft eine Progressiv-Verteilvorrichtung der im Oberbegriff des Patentanspruchs 1 angegebenen Art.

Progressiv-Verteiler für Öl- und Fett-Zentralschmieranlagen sind seit Jahrzehnten bekannt (technische Publikation DSK 0-001-00 (1.81) "IVO-Progressiv-Verteiler" der Fa. Joseph Vögele AG). Ein Progressiv-Verteiler teilt einen Volumenstrom des Schmierstoffs in mehrere Volumenströme auf die Schmierstellenanschlüsse auf. Eine Unterteilung durch einen nachgeschalteten Progressiv-Verteiler ist möglich. Wird an einer Schmierstelle ein doppelter oder dreifacher Schmierstoffbedarf erforderlich, können einzelne Schmieranschlüsse zusammengefaßt werden. Die Dosierkolben des Progressiv-Verteilers werden seriell durch den Schmierstoffdruck gesteuert, derart, daß jeweils ein Dosierkolben den Ausgang und Zugang für die von einem anderen Dosierkolben zugeteilte Schmierstoffmenge öffnet und schließt. Voraussetzung für die Funktion des Progressiv-Verteilers ist jedoch, daß kein Schmieranschluß verschlossen wird, weil sonst der Progressiv-Verteiler blockiert. Die aus der vorerwähnten Publikation bekannten Progressiv-Verteiler enthalten in einem gemeinsamen Gehäuse die Dosierkolben und die Schmieranschlüsse. Da die Dosierkolben, ihre Anschlagschrauben und die Zylinderräume Verschleiß unterliegen, muß bei einer verschleißbedingten Störung der Progressiv-Verteiler, der in der Regel eine Vielzahl von Schmieranschlüssen besitzt, ausgetauscht werden. Außerdem ist für eine Motorschmierung der ganze Progressiv-Verteiler mit der Anzahl seiner Schmieranschlüsse genau an die Anzahl der Schmierstellen anzupassen. Motorenhersteller mit einem Motorenprogramm, das sich hinsichtlich der Schmierstellen bzw. Zylinderzahl der einzelnen Typen unterscheidet, benötigen deshalb für jeden Motortyp einen Progressiv-Verteiler nach Maß.

Durch Vorbenutzung in der Praxis ist es ferner bekannt, solche Progressiv-Verteiler in eine Grundplatte und einen Kolbenverteiler aufzugliedern, um bei einem allfälligen Austausch nur den Kolbenverteiler zu ersetzen, die kein Verschleißteil bildende Grundplatte hingegen weiterzuverwenden. Dennoch besteht nach wie vor die Notwendigkeit, den jeweils verwendeten Progressiv-Verteiler maßgeschneidert für die Schmieranforderungen auszubilden, weil ein Verschließen von Schmieranschlüssen nicht möglich ist. Daraus leitet sich anwenderseitig ein erheblicher Bedarf nach Progressiv-Verteilvorrichtungen ab, die für eine maximale Anzahl von Schmierstellen ausgelegt sind, jedoch auch für weniger Schmierstellen ohne Funktionsbeeinträchtigung einsetzbar sind. Insbesondere Motorenhersteller wünschen eine einzigen Progressiv-Verteilvorrichtung, die wahlweise für sechs bis neun Zylinder-Motoren einsetzbar ist, und gegebenenfalls sogar noch zusätzliche Schmieranschlüsse für Einlaßventilbereiche versorgen kann.

Aus EP-A-0 006 239 ist es bekannt, eine mit einem Progressivschmiersystem eines Lastkraftwagens an beispielsweise drei Einlässen verbundene Steckdose am Lastkraftwagen anzuordnen, an der ein Einsteckstück anbringbar ist, das eine bestimmte Anzahl von Schmierstellenanschlüssen für Schmierleitungen zum Anhänger besitzt. Werden weniger als drei der Schmierstellenanschlüsse gebraucht, dann wird der dem nicht benötigten zugehörige Einlaß der Steckdose mit dem Rücklauf verbunden und der nicht benötigte Schmierstellenanschluß abgesperrt. Zwischen jedem Einlaß und dem Rücklauf ist ein Doppelrückschlagventil vorgesehen, das normalerweise unter Federkraft nur die Verbindung zum Rücklauf öffnet, jedoch durch einen in das Einsteckstück einsetzbaren Rohrstößel umstellbar ist, und umgestellt die Verbindung vom Einlaß zum Schmierstellenanschluß freigibt. Ein Eingriff bei dem Progressivschmiersystem erfolgt dabei nicht.

Weiterer Stand der Technik ist enthalten in EP-A-0 314 969, FR-A-1 230 534, US-A-5 480 004, US-A-5 311 968 und DE-U-91 15 265.

Der Erfindung liegt die Aufgabe zugrunde, eine Progressiv-Verteilvorrichtung der vorstehenden Art zu schaffen, die wahlweise mehrere unterschiedliche Schmieranforderungen abzudecken vermag.

Die gestellte Aufgabe wird erfindungsgemäß mit den Merkmalen des Anspruchs 1 gelöst.

Falls erforderlich, lassen sich alle Schmieranschlüsse normal nutzen. In Grenzfällen werden alle Schmieranschlüsse bis auf einen oder nur ein Schmieranschluß abgesperrt und mit dem Rücklaufkanal verbunden, und nicht benutzt. Dazwischen gibt es viele Variationsmöglichkeiten. Diejenigen Schmieranschlüsse, die mit der Rücklaufleitung verbindbar sind, lassen sich wahlweise herkömmlich benutzen oder absperren, ohne die Progressiv-Verteilvorrichtung zu blockieren. Dies bedeutet, daß die Progressiv-Verteilvorrichtung direkt für mehrere, hinsichtlich der Anzahl der Schmierstellen verschiedene Schmieranforderungen einsetzbar ist und bei Bedarf mittels der Umstelleinrichtung an die jeweilige Schmieranforderung anpaßbar ist. Bei zum Rücklaufkanal abgesperrter Strömungsverbindung wird die vom dem Schmieranschluß zugeordneten Kolben geförderte Schmiermittelmenge einer Schmierstelle zugeleitet. Bei mit dem Rücklaufkanal verbundener Strömungsverbindung geht die zugeteilte Schmiermittelmenge dieses Schmieranschlusses hingegen in den Rücklaufkanal gefördert. Auf diese Weise wird die serielle Kooperation zwischen den Kolben der Progressiv-Verteilvorrichtung zu keiner Zeit beeinträchtigt, obwohl die Progressiv-Verteilvorrichtung ohne weitere Hilfsmittel an unterschiedliche Anforderungen anpaßbar ist. Die Umstelleinrichtung kann dabei im Schmieranschluß oder außerhalb des Schmieranschlusses bzw. im Strömungsweg vom Kolben zum Schmieranschluß oder bereits beim Kolben vorgesehen sein kann. Motorenhersteller, die beispielsweise Sechs- bis Neunzylinder-Motoren mit ähnlichen Schmieranforderungen bauen, können mit demselben Typ der Progressiv-Verteilvorrichtung mit z.B. zwanzig Schmieranschlüssen (zwei pro Zylinder) die ganze Modellpalette bestücken, und falls erforderlich, sogar zwei Schmieranschlüsse für eine Einlaßventilschmierung aktivieren.

Gemäß Anspruch 2 ist die Umstelleinrichtung permanent in die Progressiv-Verteilvorrichtung integriert und, gegebenenfalls mit einem Werkzeug, jederzeit zu betätigen.

Gemäß Anspruch 3 umfaßt die Umstelleinrichtung zwei wahlweise in die Progressiv-Verteilvorrichtung einsetzbare Komponenten, mit denen sich ein Schmieranschluß passivieren oder aktivieren läßt. Diese beiden Komponenten gehören zweckmäßigerweise zur Grundausstattung der Progressiv-Verteilvorrichtung, damit der Verwender jederzeit in der Lage ist, die Umstellung vorzunehmen.

Gemäß Anspruch 4 ist der Rücklaufkanal in der Grundplatte angeordnet. Bei Verschleiß oder Beschädigung des Verteilers kann die Grundplatte weiterverwendet werden. Außerdem ist in der Grundplatte im Regelfall genügend Platz zum Unterbringen des Rücklaufkanals.

Gemäß Anspruch 5 ist die Umstellvorrichtung permanent in den Anschlußkanal von der Rücklaufleitung zum Schmieranschluß eingegliedert und wahlweise nutzbar.

Alternativ ist gemäß Anspruch 6 einer der beiden Schraubeinsätze in die den Schmieranschluß bildenden Einschraubbohrung einzubringen, um den Schmieranschluß zu aktivieren oder zu passivieren.

Eine baulich einfache, herstellungstechnisch günstige Ausführungsform geht aus Anspruch 7 hervor. Die Handhabung ist bequem und verlangt wenig Kenntnisse, so daß die Umstellung vor Ort auch von nicht geschultem Personal durchführbar ist.

Gemäß Anspruch 8 ist das Schraubstück herstellungstechnisch einfach und kostengünstig.

Gemäß Anspruch 9 wird Leckage verhindert, d.h., ein Durchlecken des Schmiermittels zum Rücklaufkanal.

Gemäß Anspruch 10 läßt sich mit einem Grundtyp der Progressiv-Verteilvorrichtung eine Motorenpalette mit Motoren mit sechs bis neun bzw. zehn Zylindern abdecken (jeweils zwei Schmierstellen pro Zylinder), bzw. lassen sich bis zu Neunzylindermotoren noch zwei Schmieranschlüsse zur Einlaßventilschmierung oder für andere Schmieranforderungen einsetzen. Nicht benötigte Schmieranschlüsse, auch einzelne, werden durch je eine Verschlußschraube passiviert, während benutzte Schmieranschlüsse durch die Schraubstücke aktiviert werden. Die sechs Paare der nicht mit dem Rücklaufkanal verbundenen Schmieranschlüsse sind in diesem Fall nicht passivierbar. Es besteht jedoch bereits wegen der unterschiedlichen Gewindedurchmesser keine Gefahr, daß ein nicht passivierbarer Schmieranschluß versehentlich abgesperrt und dadurch der Kolbenverteiler blockieren müßte, denn die Einschraubbohrungen mit dem kleineren Gewindedurchmesser lassen sich mit den Verschlußschrauben nicht bestücken. Es liegt auf der Hand, daß die Progressiv-Verteilvorrichtung auch für Zwölf- bis Achtzehnzylinder-Motoren ausgelegt werden kann, wobei die Anzahl der insgesamt nutzbaren Schmieranschlüsse dann noch größer ist, und beispielsweise bei Vierzig liegen kann, von denen sich z.B. sechzehn passivieren lassen. Femer könnten in ein und derselben Progressiv-Verteilvorrichtung alle vorgesehenen Schmieranschlüsse an den Rücklaufkanal anschließbar sein, um wahlweise jeden Schmieranschluß passivieren zu können.

Anhand der Zeichnung wird eine Ausführungsform des Erfindungsgegenstandes erläutert. Es zeigen:
- Fig. 1: eine Seitenansicht einer Progressiv-Verteilvorrichtung,
- Fig. 2: eine zugehörige Draufsicht zu Fig. 1,
- Fig. 3: eine Draufsicht auf die Grundplatte der Progressiv-Verteilvorrichtung der Fig. 1 und 2,
- Fig. 4: einen Längsschnitt der Grundplatte von Fig. 3,
- Fig. 5: einen Querschnitt eines Kolbenverteilers der Progressiv-Verteilvorrichtung der Fig. 1 und 2 in der Schnittebene V-V,
- Fig. 6: einen Querschnitt der Grundplatte in den Fig. 1 und 4 in der Schnittebene VI-VI,
- Fig. 7: einen Querschnitt der Grundplatte in Fig. 1 in der Schnittebene VII-VII,
- Fig. 8: einen Teil-Querschnitt in den Fig. 1 und 4 in den Schnittebenen VI-VI mit gestrichelt angedeuteten Komponenten einer Umstelleinrichtung,
- Fig. 9: einen Längsschnitt durch eine Komponente der Umstelleinrichtung von Fig. 8, und
- Fig. 10: eine Seitenansicht einer weiteren Komponente der Umstelleinrichtung von Fig. 8.

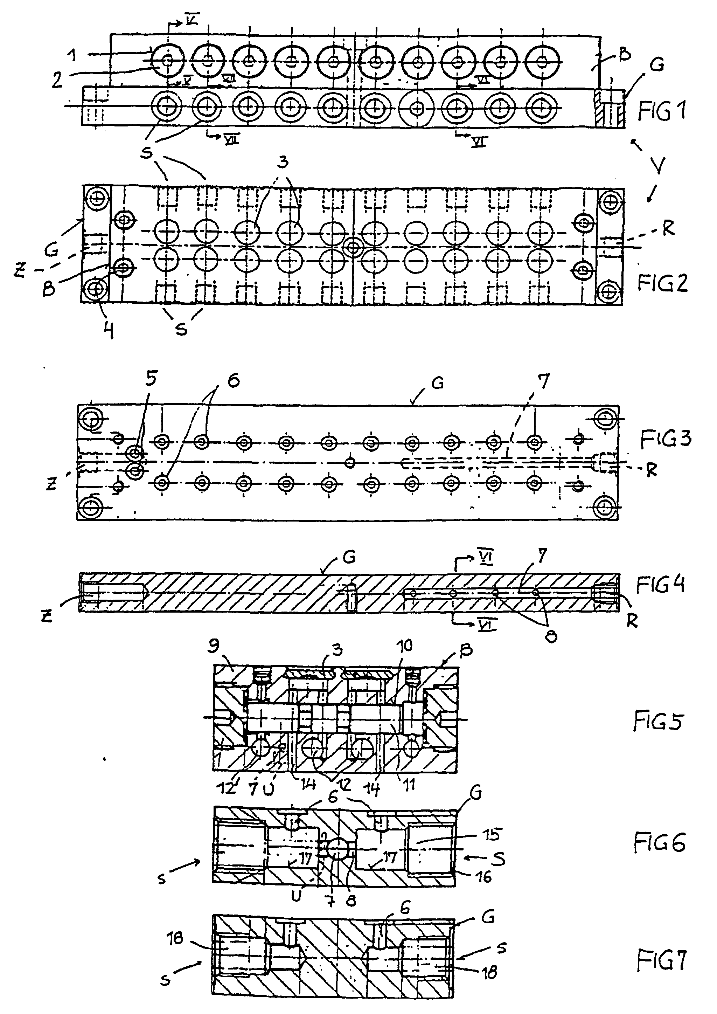

Eine Progressiv-Verteilvorrichtung V in den Fig. 1 und 2 besteht aus einer blockförmigen Grundplatte G, auf der ein ebenfalls blockförmiger Kolbenverteiler B abnehmbar festgelegt ist. Der Kolbenverteiler B enthält in Fig. 5 gezeigte Dosierkolben, die hinter in Einschraubbohrungen 1 eingeschraubten Verschlußstopfen 2 angeordnet sind. Insgesamt sind im Kolbenverteiler B zehn doppeltwirkende Dosierkolben 11 (s. Fig. 5) enthalten. Die Grundplatte G weist an beiden Längsseiten Schmieranschlüsse S auf, und zwar insgesamt zehn Paare, von denen jeweils ein Paar einem Dosierkolben zugeordnet ist. In Fig. 2 sind oberhalb der Kolben eingefügte Verschlußstopfen 3 im Kolbenverteiler B erkennbar, der mit Schrauben 4 an der Grundplatte G festgelegt ist. In einer Stirnseite der Grundplatte G ist ein Schmiermittel-Zulauf Z angeordnet, während an der anderen Stirnseite ein Rücklauf-Anschluß R vorgesehen ist.

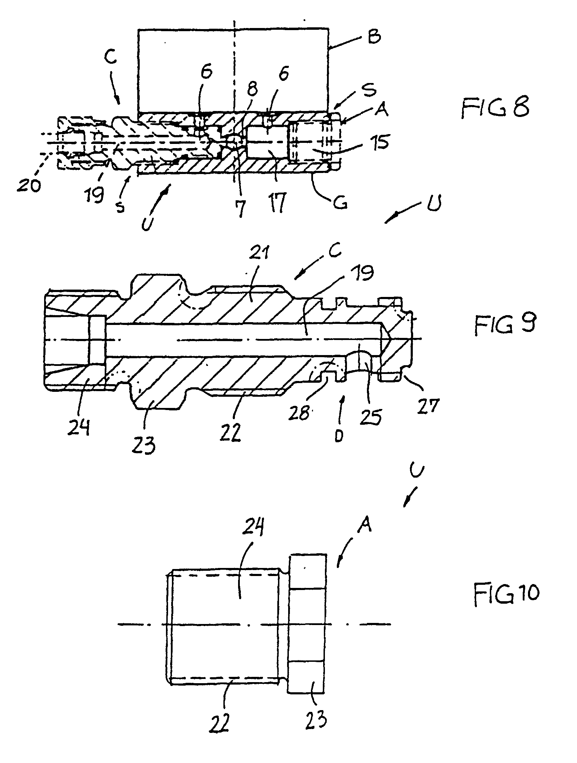

In den Fig. 3 und 4 sind in der Oberseite der Grundplatte G paarweise gruppierte Verbindungskanäle 6 zu den Schmieranschlüssen S erkennbar, sowie ein eng beieinanderliegendes Paar Verbindungskanäle 5, die den Zulauf Z mit dem Anfang des Strömungsweges im Blockverteiler B verbinden. In der Längsmitte der Grundplatte G führt vom Rücklaufanschluß R (der an eine Rücklaufleitung anschließbar ist) ein Rücklaufkanal 7 bis zur Ebene der letzten vier Verbindungskanäle 6, wobei in Fig. 4 der Rücklaufkanal 7 über Anschlußkanäle 8 an die Schmieranschlüsse S (die in Strömungsrichtung letzten vier Paare) angeschlossen ist.

Im Schnitt in Fig. 5 ist für jeden Dosierkolben 11 eine Zylinderbohrung 10 in dem Gehäuse 9 des Kolbenverteilers B vorgesehen. Das Funktionsprinzip des Kolbenverteilers B ist konventionell und braucht nicht im Detail erörtert zu werden. Es ist nur darauf hinzuweisen, daß jeder Dosierkolben 11 durch den Schmiermitteldruck in den an die Zufuhr 5 angeschlossenen Längskanälen 12 (und taktweise über die Dosierkolben 11 zuschaltbare Steuerkanäle 12') zur einen und zur anderen Seite verschoben wird, und dabei eine vorbestimmte Schmiermittelmenge fördert, wobei die geförderte Schmiermittelmenge durch einen der Verbindungskanäle 14 in einen damit fluchtenden Verbindungskanal 6 der Grundplatte G gedrückt wird, allerdings überwacht durch einen weiteren, davor- oder dahinterliegenden Kolben 11, der bei seinen Takten den Verbindungskanal 14 wechselweise absperrt und öffnet. Dies bedeutet, daß bei einer Schmiersequenz alle vorgesehenen Dosierkolben 11 nacheinander einen Takt ausführen, bei dem sie Schmiermittel fördern und die Schmiermittelförderung eines anderen Kolbens steuern.

Für jeden mit dem Rücklaufkanal 7 verbundenen Schmieranschluß S ist eine Umstelleinrichtung U vorgesehen, die es ermöglicht, den Schmieranschluß S wahlweise zu aktivieren oder zu passivieren. "Passivieren" bedeutet, daß die dem passivierten Schmieranschluß zugeführte Schmiermittelmenge in den Rücklaufkanal gefördert wird. "Aktivieren" bedeutet hingegen, daß die dem Schmieranschluß zugeteilte Schmiermittelmenge auch tatsächlich über den Schmieranschluß zu einer Schmierstelle gebracht wird.

Die Umstelleinrichtung U für jeden aktivierbaren bzw. passivierbaren Schmieranschluß S kann entweder (Fig. 5) beim Verbindungskanal 14 im Gehäuse 9 des Kolbenverteilers B angeordnet sein, oder in der Grundplatte G im oder beim Anschlußkanal 8 zwischen der Rücklaufleitung 7 und dem Schmieranschluß S, oder (Fig. 8) in Form wahlweise einsetzbarer Schraubeinsätze C oder A vorgesehen sein, die zum Ausstattungszubehör der Progressiv-Verteilvorrichtung V gehören.

Die letztgenannte Ausführungsform wird anhand der Fig. 8 bis 10 nachfolgend im Detail erläutert.

Zunächst sei auf die Fig. 6 und 8 verwiesen, in denen die Ausbildung der Grundplatte bezüglich der unterschiedlichen Schmieranschlüsse S erkennbar ist. In Fig. 6 (Schnittebene VI-VI in Fig. 1 bzw. Fig. 4) verläuft mittig zwischen den Schmieranschlüssen S der Rücklaufkanal 7, von dem jeweils ein Anschlußkanal 8 zu einem Schmieranschluß führt. Jeder dem Rücklaufkanal 7 zugeordnete Schmieranschluß S ist eine Gewindebohrung 15 mit einem Innengewindeabschnitt 16 und einem zylindrischen Bohrungsabschnitt 17. In den zylindrischen Bohrungsabschnitt 17 münden quer der Verbindungskanal 6 und der Anschlußkanal 8 in Richtung der Bohrungsachse, wobei deren Mündungen voneinander beabstandet sind.

In Fig. 7 wird jeder weitere Schmieranschluß S (nicht an den Rücklaufkanal 7 angeschlossen) von einer Gewindebohrung 18 gebildet, in die nur der Verbindungskanal 6 von oben mündet, und deren Gewindedurchmesser verschieden ist vom Gewindedurchmesser des Innengewindeabschnittes 16 der Gewindebohrungen 15. Beim gezeigten Ausführungsbeispiel ist jede Gewindebohrung 15 mit größerem Gewindedurchmesser ausgebildet als die Gewindebohrung 18, um eine Verwechslung auszuschließen.

In Fig. 8 ist angedeutet, daß der linke Schmierstellenanschluß S durch den Schraubeinsatz C aktiviert ist, d.h, daß im Bohrungsabschnitt 17 der Verbindungskanal 8 zum Rücklaufkanal 7 abgesperrt und nur der Verbindungskanal 6 zum Kolbenverteiler B mit einem Längskanal 19 im Schraubeinsatz C verbunden ist, an dem sich eine Schmierstellenleitung 20 befestigen läßt. Der in Fig. 8 rechte Schmieranschluß S ist hingegen passiviert durch den Schraubeinsatz A, der die Gewindebohrung 15 nach außen verschließt und im Bohrungsabschnitt 17 den Verbindungskanal 16 über den Anschlußkanal 8 mit dem Rücklaufkanal 7 verbindet.

Der Schraubeinsatz C ist ein Schraubstück 21 mit einem Außengewindeabschnitt 22, der in den Innengewindeabschnitt 16 der Gewindebohrung 15 paßt. Das Schraubstück 21 läßt sich mittels eines Sechskants 23 handhaben und besitzt ein Endstück 24 zum Anschließen der Schmierstellenleitung 20 mittels einer Überwurfmutter. Der Längskanal 19 endet als Blindbohrung in einem Absperrfortsatz D am rechten Ende des Schraubstückes 21, wobei der Absperrfortsatz D durch außenliegende Nuten 27, 28 für Dichtungen einen Verbindungsbereich bildet, in dem wenigstens ein radialer Stichkanal 25 zum Längskanal 19 führt.

Der Schraubeinsatz A zum Passivieren des Schmieranschlusses S ist eine Verschlußschraube 24, die ebenfalls den Außengewindeabschnitt 22 passend zum Innengewindeabschnitt 16 der Gewindebohrung 15 und einen Betätigungssechskant aufweist. Die Eindringtiefe der Verschlußschraube 24 ist so bemessen, daß sie nicht oder wenig in den Bohrungsabschnitt 17 eindringt.

Je nachdem, ob einer der Schmieranschlüsse der letzten vier Paare aktiviert oder passiviert werden soll, wird entweder das Schraubstück 21 oder die Verschlußschraube 24 in der vorbeschriebenen Weise eingesetzt.

Die in Fig. 5 bzw. Fig. 6 gestrichelt angedeuteten Umstelleinrichtungen U könnten nach Art von verdrehbaren Mehrwegeventilen oder Absperrhähnen im jeweiligen Gehäuse untergebracht und von außen durch Verdrehen betätigbar sein. Alternativ wäre es auch denkbar, in eine andere, nach außen offene Bohrung als den Schmieranschluß einen Schraubeinsatz einzufügen, der entweder eine Verbindung zum Rücklaufkanal herstellt oder die Verbindung unterbricht.

## Patentansprüche

1. Progressiv-Verteilvorrichtung (V) für Schmieranlagen, insbesondere für mehrzylindrige Dieselmotoren, mit einer mehrere Schmieranschlüsse (S) aufweisenden Grundplatte (G) und einem daran angeordneten Verteiler (B), in dem an der ein mehrere, seriell einander mittels Schmiermitteldrucks eines der Verteilvorrichtung zugeführten Schmiermittels steuernde Dosierkolben (11) enthalten sind, und mit im Verteiler (B) und in der Grundplatte (G) aufeinander ausgerichteten Verbindungskanälen (14, 6) als Strömungswege zum Zuführen der von den Dosierkolben (11) zugeteilten Schmiermittelmengen zu den Schmieranschlüssen, **dadurch gekennzeichnet, daß** in der Grundplatte ein Rücklaufkanal (7) vorgesehen ist, der an wenigstens einen Strömungsweg von einem Dosierkolben (11) zum diesem zugeordneten Schmieranschluß (S) anschließbar ist, und daß im Verteiler (B) oder in der Grundplatte (G) eine Umstellvorrichtung (U) vorgesehen ist, mit der die Verbindung zum Rücklaufkanal (7) wahlweise herstellbar oder absperrbar ist.

2. Progressiv-Verteilvorrichtung nach Anspruch 1, **dadurch gekennzeichnet, daß** die Umstellvorrichtung (U) permanent im Verteiler (B) oder in der Grundplatte (G) integriert ist.

3. Progressiv-Verteilvorrichtung nach Anspruch 1, **dadurch gekennzeichnet, daß** die Umstellvorrichtung (U) wahlweise, vorzugsweise in Schmierstellenanschlüsse (S), einsetzbare Komponenten (A, C) aufweist.

4. Progressiv-Verteilvorrichtung nach Anspruch 1, **dadurch gekennzeichnet, daß** der Rücklaufkanal (7) in der Grundplatte (G) zumindest an einen der Schmieranschlüsse (S) angeschlossen ist.

5. Progressiv-Verteilvorrichtung nach den Ansprüchen 1 oder 2, **dadurch gekennzeichnet, daß** die Umstellvorrichtung (U) in Form eines Absperrorgans in einen Anschlußkanal (8) der Rücklaufleitung (7) an den Schmieranschluß (S) eingegliedert ist.

6. Progressiv-Verteilvorrichtung nach Anspruch 3, **dadurch gekennzeichnet, daß** der Schmieranschluß (S) eine Einschraubbohrung (15) ist und die Umstelleinrichtung (U) aus zwei unterschiedlichen, wahlweise in dieselbe Einschraubbohrung (15) einsetzbaren Schraubeinsätzen (A, C) besteht, von denen der eine ein Schraubstück (21) für eine Schmierleitung (20) und der andere eine Verschlußschraube (24) ist.

7. Progressiv-Verteilvorrichtung nach Anspruch 6, **dadurch gekennzeichnet, daß** die Einschraubbohrung (15) einen innen in der Grundplatte (G) liegenden Bohrungsabschnitt (17) aufweist, in den voneinander getrennt der Verbindungskanal (6) zum Verteiler (B) und der Anschlußkanal (8) zur Rücklaufleitung (7) münden, daß das Schraubstück (21) einen Abtrennfortsatz (D) aufweist, der in den Bohrungsabschnitt (17) einbringbar ist und die Verbindungskanal-Mündung von der Anschlußkanal-Mündung trennt, und daß die Verschlußschraube (24) mit geringerer, nur bis zum Bohrungsabschnitt (17) reichender Eindringtiefe ausgebildet ist als das Schraubstück (21).

8. Progressiv-Verteilvorrichtung nach Anspruch 6, **dadurch gekennzeichnet, daß** das Schraubstück (21) einen blind im Abtrennfortsatz (D) endenden Schmiermittel-Längskanal (19) aufweist, den wenigstens ein in etwa radial nach außen geführter Stichkanal (25) im Abtrennfortsatz (D) schneidet.

9. Progressiv-Verteilvorrichtung nach Anspruch 8, **dadurch gekennzeichnet, daß** vor und hinter der außenliegenden Mündung des Stichkanals (25) Haltenuten (27, 28) für Dichtmittel vorgesehen sind.

10. Progressiv-Verteilvorrichtung nach wenigstens einem der vorhergehenden Ansprüche, **dadurch gekennzeichnet, daß** für Motoren mit zwischen sechs bis neun Zylindern die den längsverlaufenden Rücklaufkanal (7) aufweisende Grundplatte (G) mit zehn, vorzugsweise jeweils paarweise angeordneten, Schmieranschlüssen (S) ausgebildet ist, daß die in Strömungsrichtung des Schmiermittels letzten vier Paare der Schmieranschlüsse (S) Einschraubbohrungen (15) mit größerem Gewindedurchmesser als die ersten sechs Paare sind, und daß Rücklaufkanal (7) an die letzten vier Paare angeschlossen und wahlweise durch alternatives Einschrauben einer Verschlußschraube (24, A) oder eines Schraubstücks (21, C) mit jedem Schmieranschluß (S) der letzten vier Paare verbindbar oder von diesem abtrennbar ist.

## Claims

1. A progressive distributor device (V) for lubrication installations, particularly for multicylinder diesel engines, with a baseplate (G) comprising a plurality of lubrication connections (S) and a distributor (B) disposed on the baseplate, said distributor (B) containing a plurality of metering spools (11) providing serial control by means of the pressure of a lubricant fed to the distributor device, and comprising connecting ducts (14, 6) aligned relatively to one another in the distributor (B) and in the baseplate (G) as flow paths for the supply of the quantities of lubricant allocated by the metering spools (11) to the lubrication connections, **characterised in that** the baseplate contains a return duct (7) connectable to at least one flow path from a metering spool (11) to the lubrication connection (S) associated therewith, and **in that** the distributor (B) or the baseplate (G) contains a changeover device (U) by means of which it is possible selectively to make or shut off the connection to the return duct (7).

2. A progressive distributor device according to claim 1, **characterised in that** the changeover device (U) is permanently integrated in the distributor (B) or in the baseplate (G).

3. A progressive distributor device according to claim 1, **characterised in that** the changeover device (U) comprises components (A, C) which are selectively insertable, preferably into lubrication point connections (S).

4. A progressive distributor device according to claim 1, **characterised in that** the return duct (7) in the baseplate (G) is connected at least to one of the lubrication connections (S).

5. A progressive distributor device according to claim 1 or 2, **characterised in that** the changeover device (U) is incorporated in the form of a shut-off member in a junction duct (8) between the return line (7) and the lubrication connection (S).

6. A progressive distributor device according to claim 3, **characterised in that** the lubrication connection (S) is a screwed bore (15) and the changeover device (U) consists of two different screw inserts (A, C) selectively insertable in said screwed bore (15), one such insert being a screw member (21) for a lubrication line (20) and the other being a closure screw (24).

7. A progressive distributor device according to claim 6, **characterised in that** the screwed bore (15) comprises a bore portion (17) which is situated internally in the baseplate (G) and into which there lead separately of one another the connecting duct (6) to the distributor (B) and the junction duct (8) to the return line (7), **in that** the screw member (21) comprises a separation extension (D) which is introducible into the bore portion (17) and separates the connecting duct orifice from the junction duct orifice, and **in that** the closure screw (24) is constructed with a smaller depth of penetration than the screw member (21), said smaller depth of penetration extending only as far as the bore portion (17).

8. A progressive distributor device according to claim 6, **characterised in that** the screw member (21) comprises a lubricant longitudinal duct (19) terminating blind in the separation extension (D) and intersected by at least one cut-off duct (25) in the separation extension (D), said cut-off duct (25) extending radially outwards.

9. A progressive distributor device according to claim 8, **characterised in that** retaining grooves (27, 28) for sealants are provided in front of and behind the outer orifice of the cut-off duct (25).

10. A progressive distributor device according to at least one of the preceding claims, **characterised in that** for engines having between six and nine cylinders the baseplate (G) having the longitudinally extending return duct (7) is formed with ten lubrication connections (S), preferably disposed in respective pairs, **in that** the last four pairs of the lubrication connections (S) in the direction of flow of the lubricant are screwed bores (15) having a larger screwthreaded diameter than the first six pairs, and **in that** the return duct (7) is connected to the last four pairs and is selectively connectable to or separable from each lubrication connection (S) of the last four pairs by alternative screwing-in of a closure screw (24, A) or a screw member (21, C).

## Revendications

1. Distributeur (V) progressif pour des systèmes de lubrification, en particulier pour des moteurs diesel à plusieurs cylindres, avec une plaque de base (G) présentant plusieurs raccordements de lubrification (S) et un distributeur (B) monté sur elle, distributeur dans lequel sur la plaque de base sont contenus plusieurs pistons de dosage (11) commandant de façon sérielle entre eux à l'aide de la pression de fluide de lubrification d'un fluide de lubrification amené au distributeur, et avec des canaux de liaison (14, 6), placés les uns sur les autres dans le distributeur (B) dans la plaque de base (G), canaux faisant office de voies d'écoulement pour l'amenée des quantités de fluide de lubrification réparties par les pistons doseurs (11) vers les raccordements de lubrification, **caractérisé en ce que** dans la plaque de base est prévu un canal de retour (7) pouvant être raccordé à au moins une voie d'écoulement allant d'un piston de dosage (11) au raccordement de lubrification (S) associé à celui-ci et **en ce que** dans le distributeur (B) ou dans la plaque de base (G) est prévu un dispositif de réglage à commutation (U) à l'aide duquel la liaison vers le canal de retour (7) peut au choix être établie ou coupée.

2. Distributeur progressif selon la revendication 1, **caractérisé en ce que** le dispositif de réglage à commutation (U) est intégré à demeure dans le distributeur (B) ou dans la plaque de base (G).

3. Distributeur progressif selon la revendication 1, **caractérisé en ce que** le dispositif de réglage à commutation (U) présente des composants (A, C) utilisables à volonté, de préférence dans des raccordements de point de lubrification (S)

4. Distributeur progressif selon la revendication 1, **caractérisé en ce que** le canal de retour (7) est raccordé dans la plaque de base (G) et raccordé au moins à l'un des raccordements de lubrification (S).

5. Distributeur progressif selon les revendications 1 ou 2, **caractérisé en ce que** le dispositif de réglage à commutation (U) est intégré au raccordement de lubrification (S), en ayant la forme d'un organe d'isolement, dans un canal de raccordement (8) de la conduite de retour (7).

6. Distributeur progressif selon la revendication 3, **caractérisé en ce que** le raccordement de lubrification (S) est un perçage de vissage (15) et le dispositif de réglage à commutation (U) est formé de deux inserts de vissage (A, C) différents, insérables au choix dans le même perçage de vissage (15) dont l'un est un élément de vis (21) pour une conduite de lubrification (20) et l'autre est une vis de fermeture (24).

7. Distributeur progressif selon la revendication 6, **caractérisé en ce que** le perçage de vissage (15) présente un tronçon de perçage (17) placé intérieurement dans la plaque de base (G), dans lequel séparément l'un de l'autre le canal de liaison (6) allant au distributeur (B) et le canal de raccordement (8) allant à la conduite de retour (7) débouchent, **en ce que** l'élément de vis (21) présente un prolongement de séparation (D) pouvant être introduit dans le tronçon de perçage (17) et isolant l'embouchure de canal de liaison vis-à-vis de l'embouchure de canal de raccordement, et **en ce que** la vis de fermeture (24) est réalisée avec une profondeur de pénétration inférieure, n'allant que jusqu'au tronçon de perçage (17), à la profondeur de pénétration de l'élément de vis (21).

8. Distributeur progressif selon la revendication 6, **caractérisé en ce que** l'élément de vis (21) présente un canal longitudinal (19) pour l'huile pour fluide de lubrification, s'achevant de façon borgne dans le prolongement d'isolement (D), qui coupe au moins un canal de prélèvement (25), menant à peu près radialement vers l'extérieur, dans le prolongement d'isolement (D).

9. Distributeur progressif selon la revendication 8, **caractérisé en ce qu'**en amont et en aval de l'embouchure extérieure du canal de prélèvement (25) sont prévues des gorges de maintien (27, 28) pour des moyens d'étanchéité.

10. Distributeur progressif selon au moins l'une des revendications précédentes, **caractérisé en ce que** pour des moteurs ayant entre six à neufs cylindres, la plaque de base (G) présentant le canal de retour (7) s'étendant longitudinalement est réalisée avec dix raccordements de lubrification (S) disposés de préférence chaque fois par paire, **en ce que** dans la direction d'écoulement du fluide de lubrification, les quatre dernières paires des raccordements de lubrification (S) sont des perçages pour vissage (15) ayant un diamètre de filetage supérieur à celui des six premières paires et **en ce que** le canal de retour (7) est raccordé aux quatre dernières paires et, au choix par un vissage alternatif d'une vis de fermeture (24, A) ou d'un élément de vis (21, C), peut être relié à chaque raccordement de lubrification (S) des quatre dernières paires ou bien en être isolé.
